# EUROPEAN PATENT SPECIFICATION

(11) **EP 1 835 274 B1**
(45) Date of publication and mention of the grant of the patent: **24.08.2011**
(21) Application number: 05816902.0
(22) Date of filing: 16.12.2005
(51) Int. Cl.: G01L 17/00, B60C 23/04

(54) **ELECTRONIC DEVICE FOR TIRE AND METHOD FOR ATTACHING SUCH DEVICE**
ELEKTRONISCHE EINRICHTUNG FÜR EINEN REIFEN UND VERFAHREN ZUR ANBRINGUNG EINER SOLCHEN EINRICHTUNG
DISPOSITIF ELECTRONIQUE POUR PNEU ET PROCEDE DE FIXATION DUDIT DISPOSITIF

(30) Priority: 16.12.2004 JP 2004364364
(43) Date of publication of application: 19.09.2007
(73) Proprietor: THE YOKOHAMA RUBBER CO., LTD., Tokyo 105-8685 (JP)
(72) Inventor: SHIMURA, Kazuhiro c/o The Yokohama Rubber Co., Ltd., Kanagawa 2548601 (JP)
(74) Representative: HOFFMANN EITLE
(86) International application number: PCT/JP2005/023129
(87) International publication number: WO 2006/064902

(56) References cited:
- EP-A2- 0 906 839
- EP-A2- 1 006 009
- EP-B1- 1 807 269
- JP-A- 9 136 517
- JP-A- 09 136 517
- JP-A- 11 165 514
- JP-A- 2005 349 895

## Description

### TECHNICAL FIELD

The present invention relates to: an electronic device for a tire and a method for attaching the device.

### BACKGROUND ART

Conventionally, an electronic device is placed in a tire air chamber in order to measure and transmit physical quantities such as a temperature and a pneumatic pressure in a tire air chamber, and in order to transmit identification information unique to the tire. Such an electronic device for a tire has a structure in which an electronic component is encapsulated inside a case in order to protect the electronic component against moisture, and in order to prevent an external force from acting upon the electronic component.

Meanwhile, an adhesive has been used as means for attaching the electronic device for a tire to a rim outer circumferential surface of a wheel (for example, refer to Japanese patent application Kokai publication No. Hei 9-136517). However, in a case where the electronic device for a tire is attached to the rim outer circumferential surface, the electronic device may possibly fall off as a sufficient adhesive force cannot always be secured against a centrifugal force at the time of traveling. A commonly-used condensed-type adhesive is cured by an ambient humidity, and thus has a disadvantage that a waiting time required for developing a sufficient adhesive strength is long because it takes a long time that even the inside of the adhesive is completely cured. For example, the waiting time required for developing the sufficient adhesive strength is 12 hours or longer in some cases. For this reason, in the case of attaching the electronic device for a tire to a rim owned by a user, there is an inconvenience that the use of a vehicle is restricted due to the above-mentioned waiting time.

Reference is also made to EP 1 807 269 Bl, which discloses a wheel sensor for a tire pressure control device which has a holder. To create a wheel sensor for a tire pressure control device which is advantageous to manufacture and assembly and yet does not require any special valve equipment on the wheel, a pivotably mounted housing part be provided on a housing of the wheel sensor, with the housing part being pivotable via a lockable tension element. One rib is provided at the end of the pivotably mounted housing part and another is provided opposite that on the housing. To accommodate the two ribs, corresponding grooves are provided in a holding device on a wheel rim as part of the wheel.

### SUMMARY OF THE INVENTION

According to a first aspect of the present invention, there is provided an electronic device for a tire, comprising: an electronic component for transmitting information on the tire; and a case for storing the electronic component, wherein: a plurality of protrusions are provided to an adhered surface of the case; each of the protrusions has a pyramid shape; and a ratio of a surface area of the adhered surface to a projected area thereof is set at 1.1 to 3.0, the projected area being measured when the adhered surface of the case is projected in a direction of adhesion.

According to a second aspect of the present invention, there is provided an electronic device for a tire, comprising: an electronic component for transmitting information on the tire; and a case for storing the electronic component, wherein: at least one groove is provided to an adhered surface of the case.

Embodiments of the present invention can provide an electronic device for a tire and method for attaching the device, which make it possible to increase an adhesive force of an adhesive, and to reduce a waiting time required for developing a sufficient adhesive strength.

As a result of ardently repeated researches on a method for attaching an electronic device for a tire, the present inventor has found out that, in a case where a case of an electronic device for a tire is pasted to a rim outer circumferential surface of a wheel by use of an adhesive, interfacial debonding between the case and the adhesive primarily causes the electronic device to fall off. Consequently, embodiments of the present invention, can exhibit a surface area of an adhered surface of the case of the electronic device for a tire that is increased by providing a plurality of protrusions or at least one groove to the adhered surface. Thereby, when the case of the electronic device for a tire is pasted to the rim outer circumferential surface of the wheel, an adhesive force of the adhesive can be increased. With such improvement of an adhesion property, a waiting time required for developing a sufficient adhesive strength can be reduced. Accordingly, in the case where the electronic device for a tire is attached to a rim owned by a user, a time period during which the use of a vehicle is restricted can be reduced.

For embodiments of the present invention, in a case where a protrusion having a pyramid shape is adopted as each of the protrusions provided to the adhered surface of the case, the surface area of the adhered surface can be increased while contact points between the protrusions and the rim circumferential surface are minimized. Moreover, the protrusions each having a pyramid shape can be easily fabricated by mold forming. In a case where a protrusion having a grain shape is adopted as each of the protrusions provided to the adhered surface of the case, the surface area of the adhered surface can be more effectively increased. It is preferable that a ratio of the surface area of the adhered surface to a projected area thereof be set at 1.1 to 3.0. Here, the projected area is that measured when the adhered surface of the case is projected in a direction of adhesion. Thereby, an effect of increasing the adhesive force can be sufficiently obtained.

It is preferable that a single-component polyurethane adhesive (moisture curing type) be used as an adhesive for pasting a case of an electronic device for a tire to a rim outer circumferential surface of a wheel. Unlike a two-component polyurethane adhesive, the single-component polyurethane adhesive has an advantage that a main agent and a curing agent need not be measured. On the other hand, the single-component polyurethane adhesive has a disadvantage of requiring a long curing time. For this reason, according to embodiment of the present invention, in the case where the single-component polyurethane adhesive is used, work of measuring a main agent and a curing agent is not needed, while the disadvantage of requiring a long curing time is complemented. In addition, errors in measuring the adhesive can be prevented.

It is preferable that irregularities be formed in a paste region of the rim outer circumferential surface, prior to a step of adhering the electronic device for a tire. Thereby, a surface area of the paste region of the rim outer circumferential surface can be increased. Thereby, it is made possible to enhance an adhesive force between the rim outer circumferential surface and the adhesive.

### BRIEF DESCRIPTION OF THE DRAWINGS

In order to facilitate a better understanding of the present invention, and to show how the same may be carried into effect, reference will now be made, by way of example only, to the accompanying drawings.
Fig. 1 is a cross-sectional view showing a tire/wheel assembly to which an electronic device for a tire is attached according to an embodiment of the present invention.
Fig. 2 is a side view showing the electronic device for a tire according to the embodiment of the present invention.
Fig. 3 is a perspective view showing the electronic device for a tire according to an embodiment of the present invention.
Fig. 4 is a perspective view showing protrusions formed on an adhered surface of a case composing an electronic device for a tire according to the present invention.
Fig. 5 is a side view showing a relevant part of an electronic device for a tire according to another embodiment of the present invention.
Fig. 6 is a perspective view showing an electronic device for a tire according to still another embodiment of the present invention.
Fig. 7 is a perspective view showing an electronic device for a tire according to still another embodiment of the present invention.
Fig. 8 is a side view showing one example of a groove formed on the adhered surface of the case composing the electronic device for a tire according to the present invention.
Fig. 9 is a side view showing a modification example of the grooves formed on the adhered surface of the case composing the electronic device for a tire according to the present invention.
Fig. 10 is a perspective view showing a wheel in a state before an electronic device for a tire is attached.

### DETAILED DESCRIPTION OF THE DRAWINGS

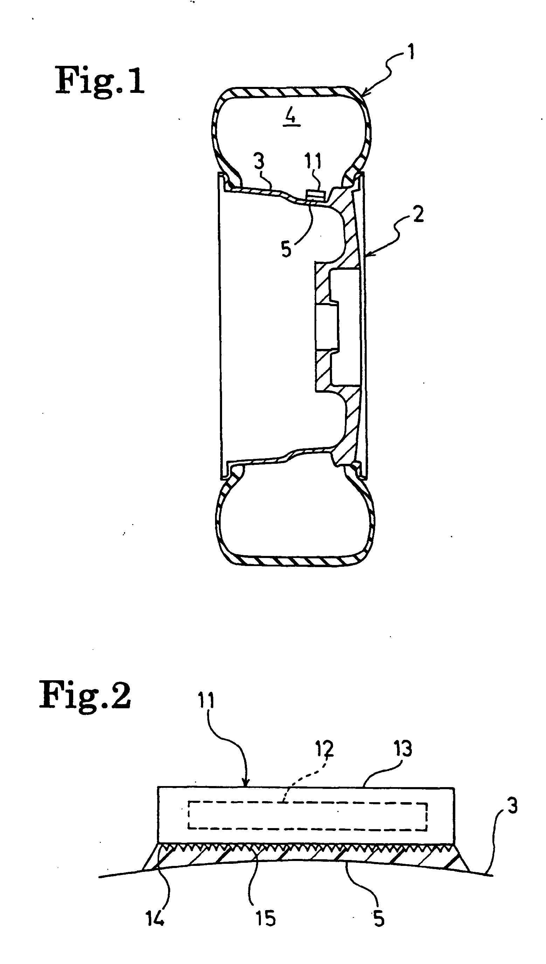

Fig. 1 shows a tire/wheel assembly to which an electronic device for a tire according to an embodiment of the present invention is attached. Figs. 2 to 4 each show the electronic device for a tire according to the embodiment of the present invention. In Fig. 1, a tire air chamber 4 is formed between a pneumatic tire 1 and a rim outer circumferential surface 3 of a wheel 2, and an electronic device 11 for a tire is attached to the rim outer circumferential surface 3 with an adhesive 5 in the tire air chamber 4.

The electronic device 11 for a tire is provided with an electronic component 12 for transmitting tire information, and a case 13 for storing the electronic component 12. The electronic component 12 includes a transmitter, a receiver, a pressure sensor, a control circuit, a battery and the like, and is configured to measure physical quantities such as a temperature and a pneumatic pressure, and to transmit them to the outside of the tire. The electronic component 12 is also configured to transmit, to the outside of the tire, identification information unique to the tire. The case 13 has a hollow structure, and is molded of plastic or the like.

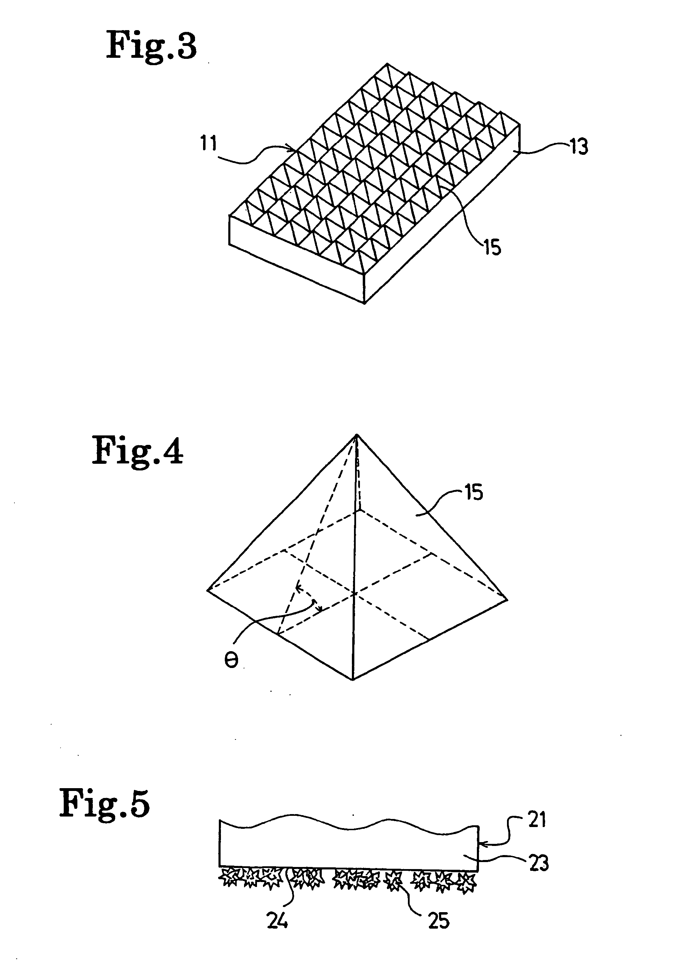

As shown in Fig. 3, a plurality of protrusions 15 are formed on an adhered surface 14 of the case 13. Each of these protrusions 15 has a shape of a square pyramid. The protrusions 15 each having a pyramid shape can increase the surface area of the adhered surface 14 while minimizing contact points with the rim outer circumferential surface 3. Furthermore, the protrusions 15 can be easily fabricated by mold forming. In addition to a square pyramid, any one of a triangular pyramid, a round pyramid and the like can be selected as the pyramid shape. It is favorable that a height of each of the protrusions 15 be 0.1 to 2.0 mm, or more preferably, 1.0 to 1.5 mm. By selecting such a range, the surface area of the adhered surface 14 can be sufficiently increased without enlarging the case 13 more than necessary.

It is favorable that a ratio of the surface area of the adhered surface 14 to a projected area obtained when the adhered surface 14 of the case 13 is projected in a direction of adhesion be 1.1 to 3.0, or more preferably, 1.4 to 2.5. If this ratio is less than 1.1, it makes an effect of increasing the surface area insufficient. On the other hand, even if this ratio exceeds 3.0, an additional effect cannot be expected, and it merely makes fabrication of the protrusions 15 difficult. For example, in a case where the protrusions 15 each take a shape of a square pyramid as shown in Fig. 4, the surface area is 1.12 times as large as the projected area when an angle θ of a sloping surface is set at 30 degrees; the surface area is 1.41 times as large as the projected area when the angle θ of the sloping surface is set at 45 degrees; and the surface area is 2.24 times as large as the projected area when the angle θ of the sloping surface is set at 60 degrees.

As the adhesive 5 for adhering the electronic device 11 for a tire to the rim outer circumferential surface 3, a single-component polyurethane adhesive, such as Hamatight WS202 (a trade name) manufactured by The Yokohama Rubber Co., Ltd., is suitable. In the case of using the single-component polyurethane adhesive, measurement errors are not generated because work of measuring a main agent and a curing agent is unnecessary. It suffices that a thickness of the adhesive 5 be set at about 0.5 to 10 mm.

As described above, by increasing the surface area of the adhered surface 14 of the case 13 of the electronic device 11 for a tire, an adhesive force of the adhesive 5 can be increased when the case 13 of the electronic device 11 for a tire is pasted to the rim outer circumferential surface 3 of the wheel 2. In reality, because a safety factor of adhered parts increases, the electronic device 11 for a tire can be prevented from falling off even in a case where adhesion work has not been performed thoroughly. With such improvement of an adhesion property, it is made possible to reduce a waiting time required for developing a sufficient adhesive strength.

Fig. 5 shows a relevant part of an electronic device for a tire according to another embodiment of the present invention. In Fig. 5, a plurality of protrusions 25 are formed on an adhered surface 24 of a case 23 composing an electronic device 21 for a tire. Each of these protrusions 25 has a grain shape. The grain shapes include a spherical shape, a blocky shape, and a particulate shape. For example, in Fig. 5, each of particles of a diameter of 0.1 to 2 mm having irregular protrusions are previously formed of the same plastic material as that of the case 23, and these particles are attached to the adhered surface 24 of the case 23.

According to the present embodiment, an effect of increasing an adhesive force of an adhesive is obtained by increasing a surface area of the adhered area 24. Furthermore, an effect of promoting a curing reaction of a single-component polyurethane adhesive can be expected because ventilation passages are more likely to remain in gaps between the protrusions 25 having the grain shapes.

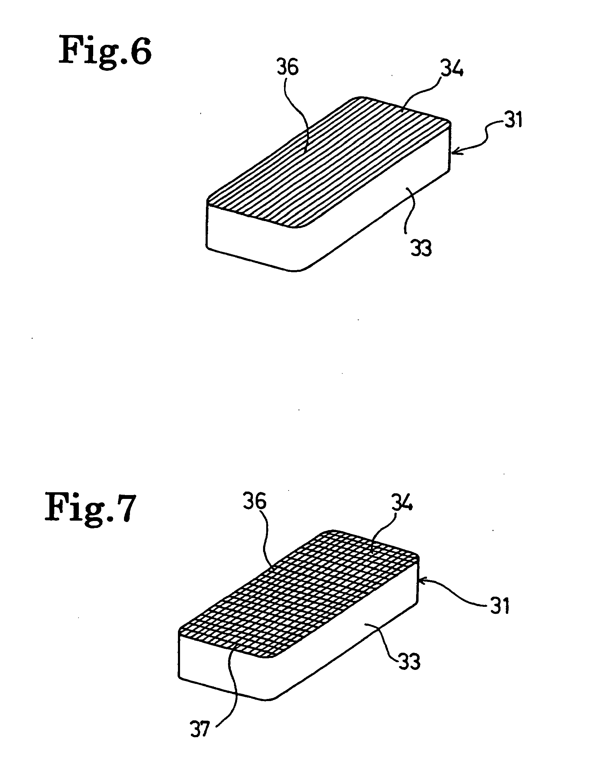

Figs. 6 and 7 each show an electronic device for tires according to still other embodiments of the present invention. In Fig. 6, a plurality of grooves 36 are formed in an adhered surface 34 of a case 33 composing an electronic device 31 for a tire, the grooves 36 extending in a longitudinal direction of the case. On the other hand, in Fig. 7, the plurality of grooves 36 extending in a longitudinal direction of the case and a plurality of grooves 37 extending in a width direction of the case are formed in the adhered surface 34 of the case 33 composing the electronic device 31 for a tire. By fabricating these grooves 36 and 37, a surface area of the adhered surface 34 of the case 33 is increased. Thereby, an adhesive force of an adhesive is increased.

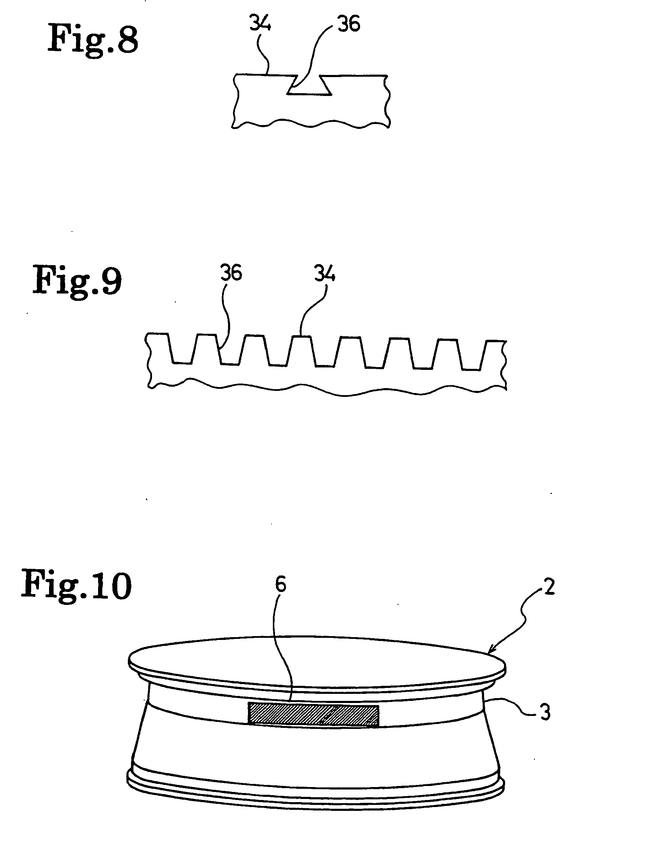

A cross-sectional shape of each of the grooves 36 and 37 is not particularly limited. For example, any one of shapes shown in Fig. 8 and Fig. 9 can be adopted. In Fig. 8, the groove 36 is wider at a bottom side thereof than at an opening side thereof. In this case, an adhesive having been cured inside the groove 36 functions as an anchor. On the other hand, in Fig. 9, a cross-sectional shape of each of the grooves 36 forms a trapezoid. In this case, fabrication thereof by mold forming is easy.

Fig. 10 shows a wheel in a state before an electronic device for a tire is attached. In Fig. 10, irregularities are formed in a paste region 6 (a region to which the electronic device for a tire is adhered) of the rim outer circumferential surface 3, prior to a step of adhering the electronic device for a tire. A knurling process is the most suitable for formation of the irregularities. However, it is also possible to deliver blows on the rim outer circumferential surface by means of a punch and the like, such as a meat hummer. By thus forming the irregularities in the paste region 6 of the rim outer circumferential surface 3, a surface area of the paste region 6 of the rim outer circumferential surface 3 is increased. Thereby, an adhesive force between the rim outer circumferential surface 3 and an adhesive can be increased.

Although the preferred embodiment of the present invention has been described in detail hereinabove, it should be understood that various alterations, substitutions and replacements can be made thereto insofar as they do not depart from the scope of the appended claims.

### EXAMPLES

Electronic devices for tires were prepared respectively as Conventional Example and Examples 1 to 5, which were made different from each other only with respect to case structures thereof. An adhered surface of a case of the electronic device for a tire of Conventional Example was made flat and smooth. An adhered surface of a case of the electronic device for a tire of Example 1 was provided with a plurality of protrusions each of which had a square pyramid shape. An adhered surface of a case of the electronic device for a tire of Example 2 was provided with a plurality of protrusions each of which had a round pyramid shape. An adhered surface of a case of the electronic device for a tire of Example 3 was provided with a plurality of protrusions each of which had a column shape. An adhered surface of a case of the electronic device for a tire of Example 4 was provided with a plurality of grooves extending in the same one direction. An adhered surface of a case of the electronic device for a tire of Example 5 was provided with a plurality of grooves extending in two directions intersecting each other. Note that a ratio of a surface area of each of the adhered surfaces to a projected area obtained when the each of the adhered surfaces is projected in a direction of adhesion is shown in Table 1. In order to secure a safety factor, each of the electronic devices for tires was adjusted to have a mass 4 times as much as a normal mass thereof.

These electronic devices for tires were respectively pasted to rim outer circumferential surfaces of wheels by use of a single-component polyurethane adhesive. After the adhesive was sufficiently cured, tire/wheel assemblies were rotated, and speeds thereof, at which the respective electronic devices for tires fell off, were measured. Results thereof are shown in Table 1. Assessment results are shown in index numbers where the result for Conventional Example is set at 100. A larger value for this index number indicates that the speed, at which the electronic device for a tire fell off, was high. Note that the speed at which the electronic device for a tire fell off in the case of Conventional Example was about 200 km/h.

Table 1

| surface | Conditions of adhered surface | Surface area ratio of adhered surface | Speed in fading-off (Index number) |
|---|---|---|---|
| Conventional Example | Flat and smooth | 1.0 | 100 |
| Example 1 | Protrusions having square pyramid shapes | 1.4 | 150 |
| Example 2 | Protrusions having round pyramid shapes | 1.3 | 135 |
| Example 3 | Protrusions having column shapes | 1.4 | 140 |
| Example 4 | Groove fabrication in one direction | 1.8 | 155 |
| Example 5 | Groove fabrication in two directions | 2.0 | 170 |

As can be observed in this Table 1, all of the respective electronic devices for tires of Examples 1 to 5 were found less likely to fall off than that of Conventional Example.

Next, with respect to the electronic devices for tires of Conventional Example and Examples 1 and 2, adhesive forces (forces required for separating the electronic devices for tires from the rim outer circumferential surfaces) were measured every two hours after adhesion work. Results thereof are shown in Table 2. Assessment results are shown in index numbers where an adhesive force of Conventional Example after it had been left for 14 hours is set at 100. A larger value for this index number indicates that the adhesive force is higher.

**Table 2**

| | Hours for being left to stand | | | | | | |
|---|---|---|---|---|---|---|---|
| | 2 hours | 4 hours | 6 hours | 8 hours | 10 hours | 12 hours | 14 hours |
| Conventional Example | 28 | 51 | 70 | 84 | 95 | 97 | 100 |
| Example 1 | 42 | 76 | 103 | 126 | 140 | 145 | 150 |
| Example 2 | 38 | 68 | 92 | 115 | 127 | 134 | 135 |

As can be observed in this Table 2, by using the electronic device for a tire of Example 1, an adhesive force developed for about 6 hours after the adhesion work was able to be equivalent to an adhesive force developed with being left for 14 hours by using Conventional Example. By using the electronic device for a tire as Example 2, an adhesive force developed for 7 hours after the adhesion work was able to be equivalent to an adhesive force developed with being left for 14 hours by using Conventional Example.

## Claims

1. An electronic device (11) for a tire (1), comprising:
an electronic component (12) for transmitting information on the tire (1); and
a case (13) for storing the electronic component (12), wherein:
a plurality of protrusions (15) are provided to an adhered surface (14) of the case (13);
each of the protrusions (15) has a pyramid shape; and
a ratio of a surface area of the adhered surface (14) to a projected area thereof is set at 1.1 to 3.0, the projected area being measured when the adhered surface (14) of the case (13) is projected in a direction of adhesion.

2. A method for attaching an electronic device (11) for a tire (1), comprising the steps of:
preparing an electronic device (11) which includes an electronic component (12) for transmitting information on the tire (1), and a case (13) for storing the electronic component (12), and in which a plurality of protrusions (15) are provided to an adhered surface (14) of the case (13);
pasting the case (13) of the electronic device (11) to a rim outer circumferential surface (13) of a wheel (2) by use of an adhesive (5), wherein:
each of the protrusions (15) has a pyramid shape; and
a ratio of a surface area of the adhered surface (14) to a projected area thereof is set at 1.1 to 3.0, the projected area being measured when the adhered surface (14) of the case (13) is projected in a direction of adhesion.

3. The method for attaching an electronic device (11) for a tire according to claim 2, wherein the adhesive (5) is a single-component polyurethane adhesive.

4. The method for attaching an electronic device (11) for a tire (1) according to claim 2 or 3, wherein irregularities
are formed on a paste region (6) on the rim outer circumferential surface (3), prior to a step of adhering the electronic device (11) for a tire (1).

## Patentansprüche

1. Elektronische Einrichtung (11) für einen Reifen (1) mit:
einer elektronischen Komponente (12) zum Übertragen von Reifeninformationen (1) und
einem Gehäuse (13) zum Aufbewahren der elektronischen Komponente (12), wobei:
mehrere Vorsprünge (15) an einer angeklebten Oberfläche (14) des Gehäuses (13) vorgesehen sind,
jeder der Vorsprünge (15) eine Pyramidenform aufweist und
ein Verhältnis einer Oberflächenfläche der angeklebten Oberfläche (14) zu einer projizierten Fläche davon im Bereich von 1,1 bis 3,0 festgelegt ist, wobei die projizierte Fläche gemessen wird, wenn die angeklebte Oberfläche (14) des Gehäuses (13) in eine Anklebrichtung projiziert wird.

2. Verfahren zum Befestigen einer elektronischen Einrichtung (11) für einen Reifen (1) mit den Schritten:
des Vorbereitens einer elektronischen Einrichtung (11) mit einer elektronischen Komponente (12) zum Übertragen von Reifeninformationen (1) und mit einem Gehäuse (13) zum Aufbewahren der elektronischen Komponente (12), und wobei mehrere Vorsprünge (15) an einer angeklebten Oberfläche (14) des Gehäuses (13) vorgesehen sind,
des Aufbringens des Gehäuses (13) der elektronischen Einrichtung (11) auf eine äußere Randumfangsoberfläche (13) eines Rads (2) unter Benutzung eines Klebers (5), wobei
jeder der Vorsprünge (15) eine Pyramidenform aufweist und
ein Verhältnis einer Oberflächenfläche der angeklebten Oberfläche (14) zu einer projizierten Fläche davon im Bereich von 1,1 bis 3,0 festgelegt ist, wobei die projizierte Fläche gemessen wird, wenn die angeklebte Oberfläche (14) des Gehäuses (13) in eine Anklebrichtung projiziert wird.

3. Verfahren zum Befestigen einer elektronischen Einrichtung (11) für einen Reifen nach Anspruch 2, bei dem der Kleber (5) ein Einzelkomponenten-Polyurethan-Kleber ist.

4. Verfahren zum Befestigen einer elektronischen Einrichtung (11) für einen Reifen (1) nach Anspruch 2 oder 3, bei dem Unregelmäßigkeiten auf einem Auftragbereich (6) auf der äußeren Randumfangsoberfläche (3) vor einem Schritt des Anklebens der elektronischen Einrichtung (11) für einen Reifen (1) ausgebildet werden.

## Revendications

1. Dispositif électronique (11) pour un bandage (1), comprenant:
un composant électronique (12) pour transmettre des informations se rapportant au bandage (1); et
un boîtier (13) pour stocker le composant électronique (12), où
plusieurs saillies (15) sont réalisées sur une surface d'adhérence (14) du boîtier (13);
chacune des saillies (15) a une forme en pyramide; et
un rapport d'une aire de surface de la surface d'adhérence (14) à sa zone projetée est établi à 1,1 jusqu'à 3,0, l'aire projetée étant mesurée lorsque la surface d'adhérence (14) du boîtier (13) fait saillie dans une direction d'adhérence.

2. Procédé de fixation d'un dispositif électronique (11) pour un bandage (1), comprenant les étapes de:
préparer un dispositif électronique (11) qui comporte un composant électronique (12) pour transmettre des informations se rapportant au bandage (1), et un boîtier (13) pour stocker le composant électronique (12), et dans lequel plusieurs saillies (15) sont réalisées sur une surface d'adhérence (14) du boîtier (13);
coller le boîtier (13) du dispositif électronique (11) à une surface circonférentielle extérieure de jante (13) d'une roue (2) en utilisant un adhésif (5), où:
chacune des saillies (15) a une forme de pyramide; et
un rapport d'une aire de surface de la surface d'adhérence (14) à son aire projetée est établi à 1,1 jusqu'à 3,0, l'aire projetée étant mesurée lorsque la surface d'adhérence (14) du boîtier (13) est projetée dans une direction d'adhérence.

3. Procédé de fixation d'un dispositif électronique (11) pour un bandage selon la revendication 2, dans lequel l'adhésif (5) est un adhésif en polyuréthane à un seul composant.

4. Procédé de fixation d'un dispositif électronique (11) pour un bandage (1) selon la revendication 2 ou 3, dans lequel des irrégularités sont formées sur une région de pâte (6) sur la surface circonférentielle extérieure de jante (3), avant l'étape d'adhérence du dispositif électronique (11) à un bandage (1).
